# EUROPEAN PATENT APPLICATION

(11) **EP 1 659 508 A1**
(43) Date of publication of application: **24.05.2006**
(21) Application number: 05110975.9
(22) Date of filing: 18.11.2005
(51) Int. Cl.: G06F 17/30

(54) **Apparatus, System, and Method for Providing Content List in Home Network**

(30) Priority: 20.11.2004 KR 200495528
(71) Applicant: SAMSUNG ELECTRONICS CO., LTD., Suwon-si, Gyeonggi-do (KR)
(72) Inventor: HAN, Hee-chul, Suwon-si (KR)
(74) Representative: Waddington, Richard

(57) **Abstract**

Provided is an apparatus, system, and method for providing a content list in a home network, in which content information owned by a plurality of devices existing in a home network is collected and a content list is created based on the collected content information and is then provided. The system includes a content information collecting device (10) which transmits a request for content information to a predetermined device having content existing in a home network, collects the content information, creates a content list based on the collected content information, and displays the created content list. The system also includes a content providing device (20) which provides its content information in response to the request for content information from the content information collecting device (10).

## Description

The present invention relates to an apparatus, system, and method for providing a content list in a home network, and more particularly, to an apparatus, system, and method for providing a content list in a home network, in which content information owned by a plurality of devices existing in a home network is collected and a content list is created based on the collected content information and is then provided.

In general, a home network is configured using an Internet Protocol (hereinafter referred to as "IP") based private network. Thus, various kinds of equipment used in the home, including all types of personal computers (PCs), intelligent appliances and wireless devices, are connected to one another and controlled through a single network.

A proposed home network system is configured in such a manner that a common virtual computing environment called middleware is established at the equipment residing on the private network and applications are provided on the computing environment. The middleware allows various kinds of equipment to communicate with one another in the home network. Currently available middleware includes home AV interoperability (HAVi), universal plug and play (UPnP), Jini, home wide web (HWW), and the like.

Various kinds of equipment residing on the home network are connected to one another in a peer-to-peer fashion through home network middleware. The respective equipment uses IP addresses that are assigned by a dynamic host configuration protocol (hereinafter, "DHCP") server or selected by an auto IP function.

In order for a user to view content in a home network through downloading or streaming, the user should access a device to view a content list of the device and select desired content from the content list.

In other words, when a user requests a content list of a second device through a first device in a home network, the first device transmits a request for the content list to the second device, receives the content list from the second device, and then displays the received content list.

Upon the user's selection of content from the displayed content list, the first device transmits to the second device a request for downloading or streaming the selected content, and thus, the user can use the downloaded or streamed content.

However, a user should select each of a plurality of devices existing in a home network to search for a desired content list and should view a content list of the selected device.

The present invention provides an apparatus, system, and method for providing a content list in a home network, by which content information owned by a plurality of devices existing in a home network is collected and a content list is created based on the collected content information and is then provided.

The present invention also provides an apparatus, system, and method for providing a content list in a home network, by which content information owned by a plurality of devices existing in a home network is simultaneously requested and collected and a content list for the collected content information is created and provided to a user, thereby allowing the user to rapidly and easily search for and select desired content.

The above stated object as well as other objects, features and advantages, of the present invention will become clear to those skilled in the art upon review of the following description.

According to the present invention there is provided an apparatus and method as set forth in the appended claims. Preferred features of the invention will be apparent from the dependent claims, and the description which follows.

According to an aspect of the present invention, there is provided a content information collecting device including a user command input unit operable to receive a user's command, a content information requesting unit which is operable to transmit a request for content information to one or more predetermined devices having content desired by the user in response to the user's command, a content list creating unit which is operable to create a content list based on the content information collected in response to the request for the content information, and a display unit which is operable to display the created content list.

According to another aspect of the present invention, there is provided a content providing device including a content information providing unit which is operable to divide content streamed or downloaded from a predetermined device or a storage medium into content data and content information, to separately store the content data and the content information, and to provide its content information in response to a request for content information, a content information storing unit which is operable to store the content information, and a content storing unit which is operable to store the content data.

According to still another aspect of the present invention, there is provided a system for providing a content list in a home network, the system including a content information collecting device which is operable to transmit a request for content information to one or more predetermined devices having content existing in a home network, to collect the content information, to create a content list based on the collected content information, and to display the created content list, and a content providing device which is operable to provide its content information in response to the request for content information from the content information collecting device.

According to yet another aspect of the present invention, there is provided a method for providing a content list in a home network, the method including inputting a command, by a user, for requesting a content list, transmitting a request for content information to one or more predetermined devices having content in response to the user's command, creating a content list based on content information collected in response to the request for content information, and displaying the created content list.

For a better understanding of the invention, and to show how embodiments of the same may be carried into effect, reference will now be made, by way of example, to the accompanying diagrammatic drawings in which:
FIG. 1 is a block diagram of a system for providing a content list in a home network according to the present invention;
FIG. 2 is a block diagram of a content information collecting device of a system for providing a content list in a home network according to the present invention;
FIG. 3 is a block diagram of a content providing device of a system for providing a content list in a home network according to the present invention;
FIG. 4 is a flowchart illustrating a method for providing a content list in a home network, according to the present invention;
FIGS. 5A and 5B illustrate content items classified into predetermined categories based on content information in a method for providing a content list in a home network according to the present invention; and
FIG. 6 illustrates a content list of content information displayed in tabular form in a method for providing a content list in a home network according to the present invention.

There is a need for a technique for providing a list of content owned by a plurality of devices existing in a home network to a user, thereby allowing the user to quickly and easily select desired content.

Japanese Patent Publication No. 2003-330827 discloses a content playback apparatus, a server connection method, a server connection program, and a recording medium, in which music data is searched for in servers of a home network for streaming playback. The technique involves rapidly searching for desired music data, but does not disclose simultaneously searching for content owned by a plurality of devices existing in a home network.

Advantages and features of the present invention and methods of accomplishing the same may be understood more readily by reference to the following detailed description of exemplary embodiments and the accompanying drawings. The present invention may, however, be embodied in many different forms and should not be construed as being limited to the exemplary embodiments set forth herein. Rather, these exemplary embodiments are provided so that this disclosure will be thorough and complete and will fully convey the concept of the invention to those skilled in the art, and the present invention will only be defined by the appended claims. Like reference numerals refer to like elements throughout the specification.

The present invention is described hereinafter with reference to flowchart illustrations of methods according to exemplary embodiments of the invention.

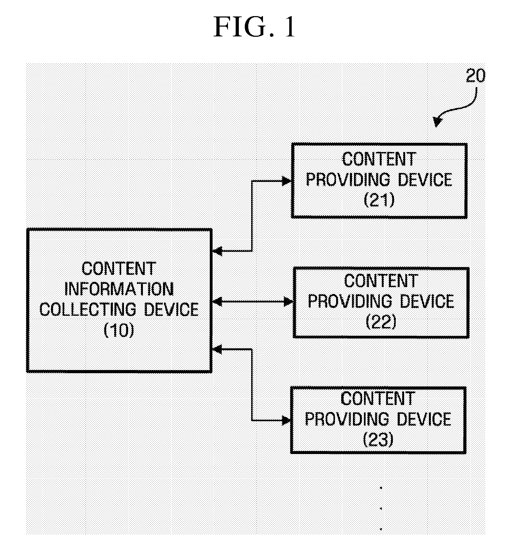

FIG. 1 is a block diagram of a system for providing a content list in a home network according to the present invention.

Referring to FIG. 1, the system includes a content information collecting device 10 and a plurality of content providing devices 21, 22, and 23.

The content information collecting device 10 transmits a request for content information to the plurality of content providing devices 21, 22, and 23 that own content in a home network and collects the content information from the plurality of content providing devices 21, 22, and 23. Here, the content information collecting device 10 may be a digital television (TV), a plasma display panel (PDP), or a liquid crystal display (LCD) monitor.

The content information collecting device 10 creates a content list based on the collected content information and displays the created content list. Here, the content may be multimedia data such as video data, image data, or audio data and content information may be a content type, a content producer, a content description, a content production date, information on content location, and so on. The information on content location is used when a user selects a predetermined content and a request for streaming or downloading data of the selected content is transmitted to a device having the selected content.

In addition, once the user selects content from the displayed content list, the content information collecting device 10 checks the content providing device 20 having the selected content and transmits a request for data of the selected content to the checked content providing device 20.

The content information collecting device 10 then reproduces the data transmitted from the content providing device 20.

For example, when the user selects a content "Mission Impossible" from a content list, the content information collecting device 10 checks information on the location from the "Mission Impossible" content.

The location information of the "Mission Impossible" content includes information such as <a href = "http://192.168.0.2/play.cgi?mission impossible.wmv">. Here, "192.168.0.2" is an IP address of a content providing device having the "Mission Impossible" content.

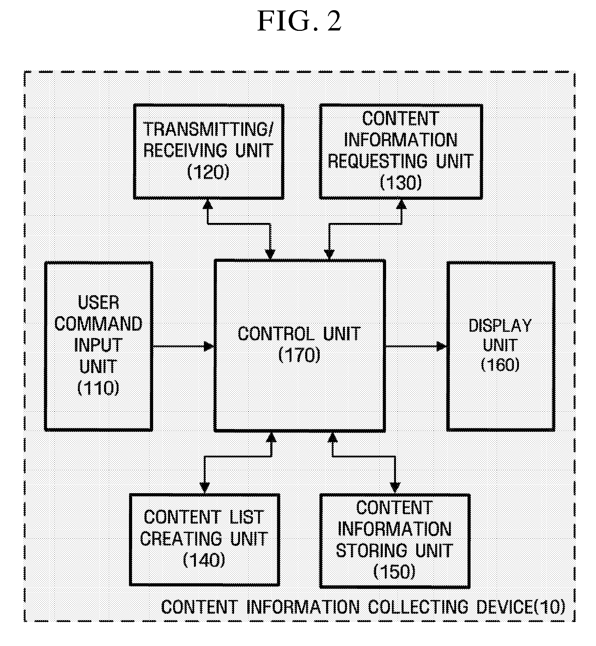

Next, the content information collecting device 10 controls an execution command of play.cgi using mission impossible.wmv as a parameter and reproduces the "Mission Impossible" content for the user. Hereinafter, the content information collecting device 10 will be described in more detail with reference to FIG. 2.

The content providing device 20 provides its content information in response to a request for content information from the content information collecting device 10. Here, the content providing device 20 may be a device that directly includes content sources or is provided with content from another device and stores the content, such as a set-top box, a digital TV, a DVD player, or a D-VHS player.

For example, when the content information collecting device 10 transmits a request for content information to the content providing device 20, the content providing device 20 transmits its content information to the content information collecting device 10. The content providing device 20 divides content streamed or downloaded from a predetermined device and a storage medium into content data and content information and stores them separately. Here, the content may be multimedia data such as video data, image data, or audio data and content information may be a content type, a content producer, a content description, a content production date, information on content location, and so on.

In other words, the content providing device 20 extracts only content information from the streamed or downloaded content and stores the content information in a content information storing unit 230 and stores the remaining content data in a content storing unit 240.

When the content information collecting device 10 transmits a request for content information to the content providing device 20, the content providing device 20 extracts the content information from the content information storing unit 230 and transmits the content information to the content information collecting device 10.

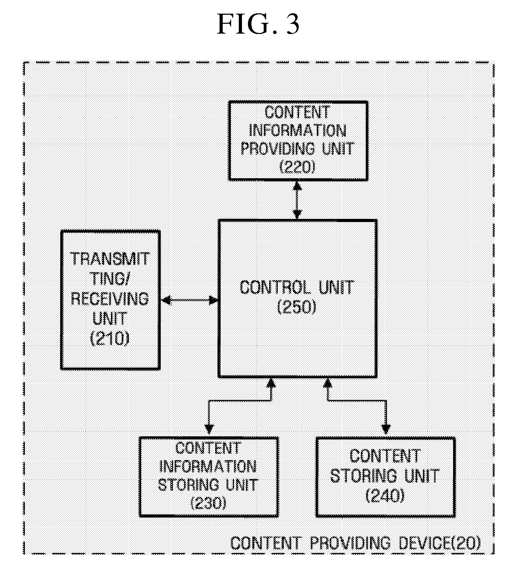

When the content information collecting device 10 transmits a request for content data to the content providing device 20, the content providing device 20 searches for the content data in the content storing unit 240 and transmits the found content data to the content information collecting device 10. Hereinafter, the content providing device 20 will be described in more detail with reference to FIG. 3.

FIG. 2 is a block diagram of the content information collecting device 10 of a system for providing a content list in a home network according to the present invention.

Referring to FIG. 2, the content information collecting device 10 includes a user command input unit 110, a transmitting/receiving unit 120, a content information requesting unit 130, a content list creating unit 140, a content information storing unit 150, a display unit 160, and a control unit 170.

A predetermined command issued by a user is input to the user command input unit 110.

For example, when the user requests a content list and reproduction of specific content, a corresponding command issued by the user is input to the user command input unit 110.

The transmitting/receiving unit 120 transmits data to and receives data from the content providing device 20 through a cable/wireless network.

For example, the transmitting/receiving unit 120 transmits a command for requesting streaming of predetermined content data to the content providing device 20 or receives content information and content data from the content providing device 20.

The content information requesting unit 130 transmits a request for content information to the plurality of content providing devices 21, 22, and 23 having predetermined content in response to a user's command. Here, the request for content information may be a prescribed HTTP command destined for an IP address of the content providing device 20.

The content list creating unit 140 creates a content list based on content information that is transmitted and collected from the content providing device 20 in response to the request for the content information.

In other words, the content list creating unit 140 classifies collected content into predetermined categories to create content items. Here, each of the content items created for the respective categories includes a content list in a table form and the content list in a table form includes detailed information of content.

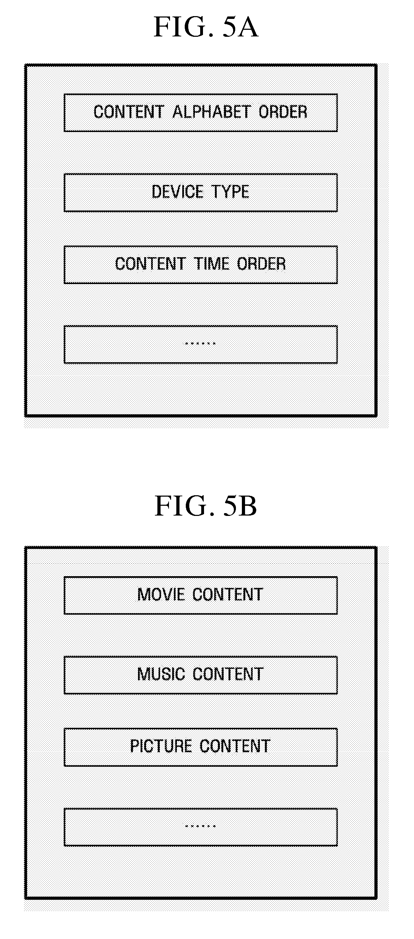

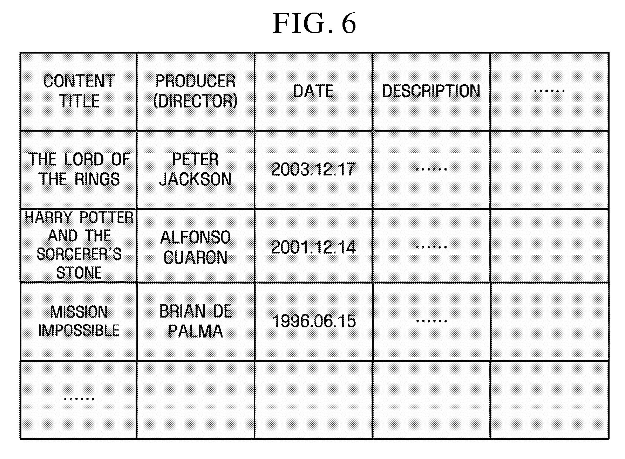

For example, content items can be sorted alphabetically by content title, and content items may be sorted by time based on delivery date or updating date in a table form. Hereinafter, the content list will be described in more detail with reference to FIGS. 5A and 5B and FIG. 6.

The content information storing unit 150 stores content information collected from the content providing device 20. Here, the content information may be a content type, a content producer, a content description, a content production date, information on content location, and so on.

The display unit 160 displays content items and a content list created by the content list creating unit 140 and reproduces content data selected by the user.

Upon receipt of a user's command for requesting content information through the user command input unit 110, the control unit 170 controls the content information request unit 130 to transmit a request for content information to the content providing devices 21, 22, and 23 existing in a home network.

The control unit 170 controls the content list creating unit 140 to create a content list based on content information collected in response to the request for content information and controls the display unit 160 to display the created content list.

When the user selects specific content from the displayed content list, the control unit 170 controls the transmitting/receiving unit 120 to transmit a request for content data to the content providing device 20 and controls the display unit 160 to reproduce the received content data.

FIG. 3 is a block diagram of the content providing device 20 of a system for providing a content list in a home network according to the present invention.

Referring to FIG. 3, the content providing device 20 includes a transmitting/receiving unit 210, a content information providing unit 220, a content information storing unit 230, a content storing unit 240, and a control unit 250.

The transmitting/receiving unit 210 receives the request for content information from the content information collecting device 10 through a cable/wireless network and transmits content information and content data to the content information collecting device 10.

The content information providing unit 220 provides its content information in response to the request for content information from the content information collecting device 10. Here, the content information may be a content type, a content producer, a content description, a content production date, information on content location, and so on.

The content information providing unit 220 also divides content streamed or downloaded from a predetermined device and a storage medium into content data and content information and separately stores the content data and content information.

In other words, the content information providing unit 220 extracts only content information from the streamed or downloaded content and stores the content information in the content information storing unit 230 and stores the remaining content data in the content storing unit 240.

Thus, when the content information collecting device 10 transmits a request for content information to the content providing device 20, the content providing device 20 extracts the content information from the content information storing unit 230 and transmits the content information to the content information collecting device 10. When the content information collecting device 10 transmits a request for content data to the content providing device 20, the content providing device 20 searches for the content data in the content storing unit 240 and transmits the found content data to the content information collecting device 10.

By separately storing content information and content data, the content providing device 20 can rapidly transmit content information and predetermined content data in response to the request for them from the content information collecting device 10.

The content information storing unit 230 stores only content information extracted from content that is streamed or downloaded from a predetermined device and a storage medium.

The content storing unit 240 stores only content data extracted from the content that is streamed or downloaded from the predetermined device and the storage medium.

The control unit 250 controls the content information providing unit 220 to transmit its content information and content data upon receipt of requests for content information and content data from the content information collecting device 10 through the transmitting/receiving unit 210.

In addition, the control unit 250 controls the content information providing unit 220 to separately store content information and content data of content streamed or downloaded from a predetermined device or a storage medium in the content information storing unit 230 and the content storing unit 240.

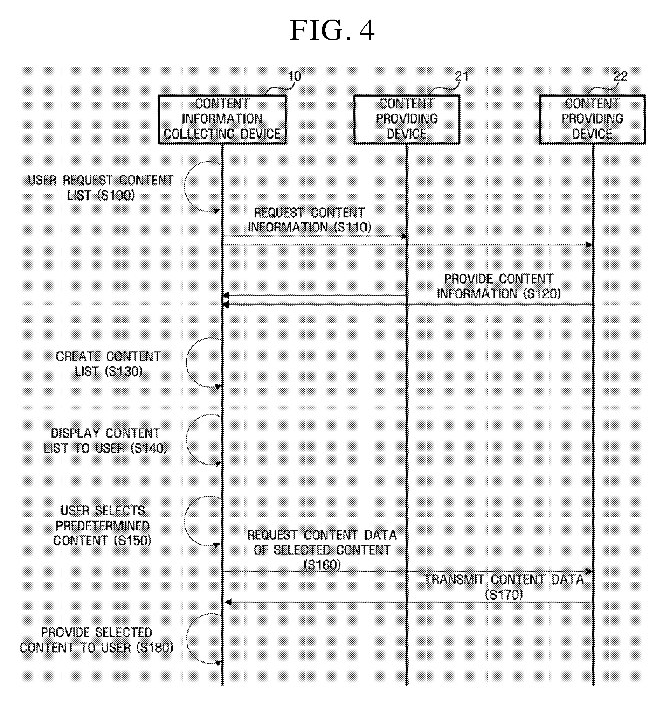

FIG. 4 is a flowchart illustrating a method for providing a content list in a home network according to the present invention.

When a user issues a command for requesting a content list menu to the content information collecting device 10 in step S100, the command is input to the user command input unit 110 of the content information collecting device 10 and the user command input unit 110 transmits the input user's command to the control unit 170.

The control unit 170 controls the content information requesting unit 130 to transmit a request for content information to the content providing devices 21 and 22 existing in a home network.

Thus, the content information requesting unit 130 transmits a request for content information to the content providing devices 21 and 22 in step S110.

The content providing devices 21 and 22 receive the request for content information from the content information collecting device 10 through the transmitting/receiving unit 210 and the content information providing unit 220 transmits content information stored in the content information storing unit 230 to the content information collecting device 10 in step S120. Here, the content information may be a content type, a content producer, a content description, a content production date, information on content location, and so on.

The transmitting/receiving unit 120 of the content information collecting device 10 receives content information from the content providing devices 21 and 22 and transmits the received content information to the control unit 170.

The control unit 170 stores the transmitted content information in the content information storing unit 150 and then transmits the content information to the content list creating unit 140.

The content list creating unit 140 collects the transmitted content information and creates a content list based on the collected content information in step S130.

The content list creating unit 140 classifies collected content into predetermined categories to create content items and includes the content list in a table form in each of the created content items for the respective categories.

The control unit 170 provides the created content list to the user through the display unit 160 in step S140. Once the user selects specific content from the displayed content list in step S150, the control unit 170 checks the content providing device 20 having the selected content and transmits a request for the selected content to the content providing device 20 according to the result of checking in step S160.

Here, the control unit 170 can find the content information providing unit 220 having the selected content through content location information included in content information.

Next, the content information providing unit 220 having the selected content receives a request for content data from the content information collecting device 10, searches for the content data in the content storing unit 240, and transmits the found content data to the content information collecting device 10 in step S170.

The control unit 170 of the content information collecting device 10 then reproduces the content data received through the transmitting/receiving unit 120 and displays the content data to the user in step S180.

Thus, the content information collecting device 10 collects content information from the content providing device 20 including the plurality of content providing devices 21, 22, and 23 in a home network and creates and provides a content list of the collected content information, thereby allowing a user to rapidly and conveniently obtain desired content information and content data.

FIGS. 5A and 5B illustrate content items classified into predetermined categories based on content information, in a method for providing a content list in a home network according to an exemplary embodiment of the present invention.

Referring to FIG. 5A, content items may be classified into sorting types (a content alphabet order and a content time order, and device types).

For example, content items can be sorted alphabetically by content title, and content items may be sorted by time based on a date when the content is released or updated in a table form. The device types indicate sorting of content based on devices in which the content is contained.

For example, when a device A has "The Lord of the Rings" content and "Harry Potter and the Sorcerer's Stone" content and a device B has "Mission Impossible" content and "Roman Holiday" content, the content may be arranged into content items for the devices A and B.

Thus, when the user selects a content item, a content list of the selected content item is provided to the user.

Referring to FIG. 5B, content items may be created for content types and displayed.

For example, content items can be created for movie content, music content, and picture content and the user can select a desired content item. Then, a content list of the selected content item is provided to the user. Hereinafter, a content list will be described with reference to FIG. 6.

FIG. 6 illustrates a content list of content information displayed in tabular form in a method for providing a content list in a home network according to the present invention.

Referring to FIG. 6, the content list can be provided in tabular form and provides additional information about content, i.e., the title of content, the producer (director) of content, the manufacturing date of content, and the description of content. Here, the content information provided in the content list in tabular form is only an exemplary embodiment of the present invention and other information about content may be further provided. The content information may also be provided in various forms in addition to tabular form.

Thus, the user can be simultaneously provided with content information of a plurality of content providing devices existing in a home network and select desired content after checking the title of content and the description of content in a displayed content list.

A system, device, and method for providing a content list in a home network according to the present invention provide at least the following advantages.

First, the user can be simultaneously provided with all content information in the home network and conveniently select desired content, by requesting and collecting content information of a plurality of content providing devices existing in a home network and creating a content list of the collected content information and providing the created content list to a user.

Second, content information of the plurality of content providing devices existing in a home network can be managed in an integrated manner through a content information collecting device.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A content information collecting device comprising:
a user command input unit (110) operable to receive a user's command;
a content information requesting unit (130) which is operable to transmit a request for content information to one or more predetermined devices (21,22,23) comprising content desired by the user in response to the user's command;
a content list creating unit (140) which is operable to create a content list based on the content information collected in response to the request for the content information; and
a display unit (160) which is operable to display the content list.

2. The content information collecting device of claim 1, further comprising a content information storing unit (150) which is operable to store the collected content information.

3. The content information collecting device of claim 1 or claim 2, wherein the content list creating unit (140) is operable to create a plurality of content lists, each of the plurality of content lists corresponds to a respective predetermined category among a plurality of predetermined categories based on the collected content information.

4. The content information collecting device of any preceding claim, wherein the content information comprises location information pertaining to a location where the content desired by the user is stored.

5. A content providing device comprising:
a content information providing unit (220) which is operable to divide content streamed or downloaded from a predetermined device or a storage medium into content data and content information, to separately store the content data and the content information, and to provide its content information in response to a request for content information;
a content information storing unit (230) which is operable to store the content information; and
a content storing unit (240) which is operable to store the content data.

6. A system for providing a content list in a home network, the system comprising:
a content information collecting device (10) which is operable to transmit a request for content information to one or more predetermined devices (21,22,23) comprising content existing in a home network, to collect the content information, to create a content list based on the collected content information, and displays the content list; and
a content providing device (20) which is operable to provide its content information in response to the request for content information from the content information collecting device (10).

7. The system of claim 6, wherein the content information collecting device (10) comprises:
a user command input unit (110) operable to receive a user's command;
a content information requesting unit (130) which is operable to transmit the request for content information to the one or more predetermined devices (21,22,23) comprising content desired by the user in response to the user's command;
a content list creating unit (140) which is operable to create the content list based on the content information collected in response to the request for the content information; and
a display unit (160) which is operable to display the content list.

8. The system of claim 6 or claim 7, wherein the content providing device comprises:
a content information providing unit (220) which is operable to divide content streamed or downloaded from a predetermined device or a storage medium into content data and content information, to separately store the content data and the content information, and to provide its content information in response to the request for content information;
a content information storing unit (230) which is operable to store the content information; and
a content storing unit (240) which is operable to store the content data.

9. The system of any one of claims 6 to 8, wherein the content information comprises location information pertaining to a location where the content desired by the user is stored.

10. A method for providing a content list in a home network, the method comprising:
inputting a command, by a user, for requesting the content list;
transmitting a first request for content information to one or more predetermined devices (21,22,23) having content in response to the command;
creating the content list based on content information collected in response to the first request for content information; and
displaying the created content list to generate a displayed content list.

11. The method of claim 10, wherein the content information comprises location information pertaining to a location where the content desired by the user is stored.

12. The method of claim 10 or claim 11, wherein the creating the content list comprises classifying the content information collected into one or more predetermined categories.

13. The method of any one of claims 10 to 12, further comprising:
selecting content, by the user, from the displayed content list to generate selected content;
checking a content providing device having the selected content;
transmitting a second request, for content data corresponding to the selected content, to the content providing device; and
providing the content data, transmitted from the content providing device, to the user.
